# EUROPEAN PATENT SPECIFICATION

(11) **EP 3 638 090 B1**
(45) Date of publication and mention of the grant of the patent: **26.03.2025**
(21) Application number: 18726813.1
(22) Date of filing: 25.05.2018
(51) Int. Cl.: A47L 15/42, A47L 15/48

(54) **A DISHWASHER COMPRISING A HEAT PUMP**
GESCHIRRSPÜLER MIT EINER WÄRMEPUMPE
LAVE-VAISSELLE COMPRENANT UNE POMPE À CHALEUR

(30) Priority: 12.06.2017 TR 201708620
(43) Date of publication of application: 22.04.2020
(73) Proprietor: Arçelik Anonim Sirketi, 34445 Istanbul (TR)
(72) Inventor: POYRAZ, Onur, 34950 Istanbul (TR); KUTUK, Erkan, 34950 Istanbul (TR); SAGLICAN, Emre, 34950 Istanbul (TR); ALPTEKIN, Ahmet, 34950 Istanbul (TR); AYDIN, Ilyas, 34950 Istanbul (TR)
(86) International application number: PCT/EP2018/063822
(87) International publication number: WO 2018/228803

(56) References cited:
- DE-A1- 3 048 268
- US-A1- 2017 143 182

## Description

The present invention relates to a dishwasher comprising a heat pump.

In dishwashers, heat pumps are used to decrease the energy consumption and improve the drying performance. In heat pump dishwashers, the heat pump is composed of the compressor, the condenser, the throttle valve and the evaporator elements. The components of the heat pump are connected via a pipe line and the heat pump operates by means of the cycle fluid in the line. The condenser is a tube bundle having a hot surface and enables the water to be heated by being positioned in the washing liquid of the dishwasher. The evaporator has a cold surface and is positioned so as to contact the ambient air. The evaporator absorbs heat from the environment and provides heat transfer to the compressor and the condenser. In this type of heat pump systems, for heating the water, the compressor is operated to enable the condenser to heat the water, and the evaporator is enabled to absorb heat from the environment to support the condenser that heats the water. However, in the dishwashers, the same heat pump is needed to be also used for drying. In such cases, since the same heat exchangers cannot be used in direct cooperation with the drying duct, an additional condenser or evaporator is needed for the drying duct. The additional condenser and evaporator increase the cost and the energy consumption and causes layout problems in the dishwasher.

In the state of the art European Patent Document No. EP2322072, a dishwasher is disclosed, comprising a heat pump that enables the stored heat to be used in the drying step since the heat exchanger is placed in a housing. United States Patent Application No. 2017/143182 discloses a conveyor dishwasher comprising a wastewater heat recovery system for saving energy. German Patent Application No. DE3048268 discloses a heat recovery system for dishwashers, wherein a heat pump draws off and supplies heat independently of the dishwasher operation.

The aim of the present invention is the realization of a dishwasher with improved drying performance.

The dishwasher realized in order to attain the aim of the present invention is defined in the first claim and the respective claims depending thereofcomprises a body; a washing tub that is disposed in the body and wherein the dishes to be washed are placed; a drying duct that is arranged between the washing tub and the body and that enables the air used in the drying step to be dehumidified, and a heat pump that is disposed between the washing tub and the body. The heat pump comprises a first heat exchanger that absorbs heat from the environment so as to enable the water used in the washing step to be heated, a second heat exchanger that transfers the heat received from the first heat exchanger to the washing tub, and a compressor that performs the refrigerant cycle between the first heat exchanger and the second heat exchanger. The dishwasher of the present invention comprises at least one extension that extends from the first heat exchanger and/or the second heat exchanger. The extensions can be used in addition to the first heat exchanger and/or the second heat exchanger.
extensionIn an embodiment of the present invention, the dishwasher comprises the water tank that provides the formation of a cold surface or a hot surface by means of the water therein that is heated or cooled. By means of the hot or cold surface of the water tank, the drying air can be dehumidified more quickly.

In an embodiment of the present invention, the dishwasher comprises a first water tank and a second water tank. The extension that extends from the first heat exchanger reaches the first water tank and the extension that extends from the second heat exchanger reaches the second water tank. A cold surface is created on the first water tank while a hot surface is created on the second water tank.

In an embodiment of the present invention, the dishwasher comprises a drying duct that has a hot water tank and a cold water tank that are disposed between the side wall of the washing tub and the body. The air taken into the drying duct hits the surfaces of the hot and cold water tanks so as to be dehumidified. The water that is cooled in the first water tank is transferred to the cold water tank by means of a first pump and the water that is heated in the second water tank is transferred to the hot water tank by means of a second pump.

A dishwasher realized in order to attain the aim of the present invention is illustrated in the attached figures, where:
Figure 1 - is the perspective view of the dishwasher.
Figure 2 - is the schematic view of the heat pump.
Figure 3 - is the schematic view of the first heat exchanger.
Figure 4 - is the schematic view of the second heat exchanger.
Figure 5 - is the schematic view of the water tanks.

The elements in the figures are numbered as follows:
1. Dishwasher
2. Body
3. Washing tub
4. Drying duct
5. First heat exchanger
6. Second heat exchanger
7. Compressor
8. Heat pump
9. Extension
10. Water tank
   10a- First water tank
   10b- Second water tank
11. Hot water tank
12. Cold water tank
13. First pump
14. Second pump

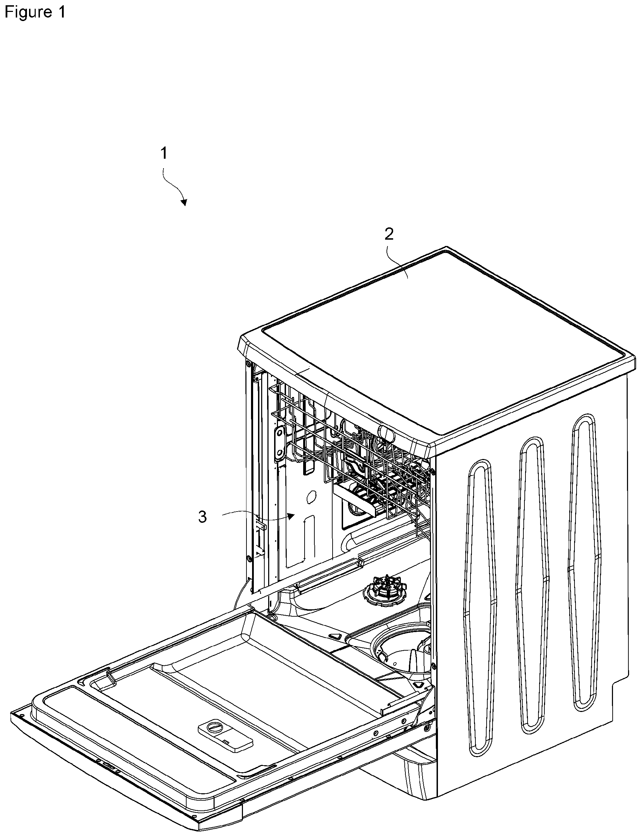

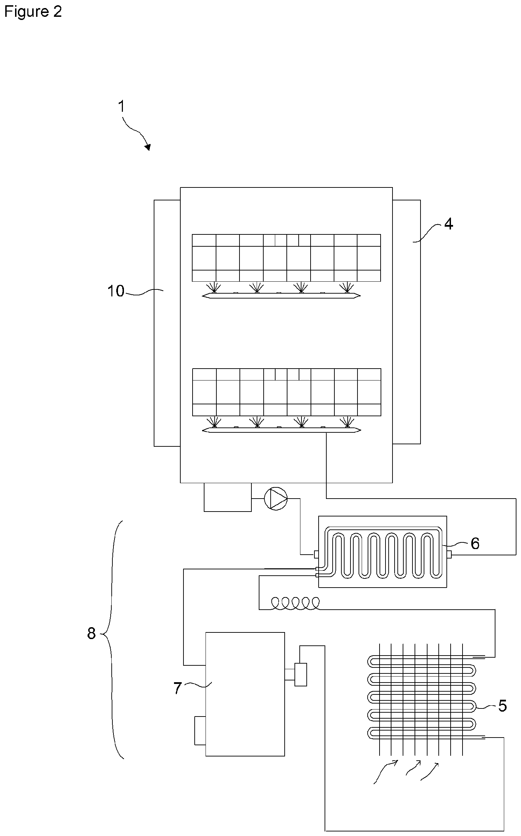

The dishwasher (1) comprises a body (2); a washing tub (3) that is disposed in the body (2) and wherein the washing process is performed; a drying duct (4) that is arranged between the washing tub (3) and the body (2) and that enables the dry air to be sent into the washing tub (3); and a heat pump (8) that is disposed under the washing tub (3) and that has a first heat exchanger (5) enabling the water to be used in the washing step to be heated by drawing heat from the environment, a second heat exchanger (6) transferring the heat received from the first heat exchanger (5) to the washing water and a compressor (7) fluidly connected to the first heat exchanger (5) and the second heat exchanger (6) so as to realize the refrigerant cycle. By means of the heat pump (8), the air in the washing tub (3) is dehumidified and sent back into the washing tub (3). Thus, the water droplets remaining on the dishes in the washing tub (3) after the washing process can be removed more quickly, thereby improving the drying performance (Figure 1, Figure 2).

The dishwasher (1) of the present invention comprises at least one water tank (10) that is disposed between the washing tub (3) and the body (2), and at least one extension (9) that extends from the first heat exchanger (5) and/or the second heat exchanger (6) towards the water tank (10) so as to enable the water in the water tank (10) to be heated or cooled.

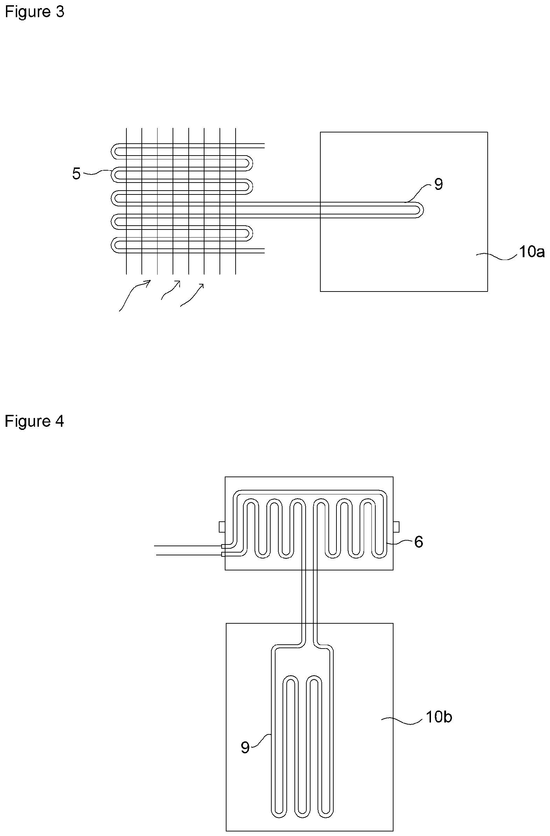

By means of the extensions (9), the heat exchangers (5, 6) are used as heat sources. Thus, the drying process can be completed in a shorter period of time (Figure 3).

In an embodiment of the present invention, the dishwasher (1) comprises the extension (9) that enables the formation of a hot surface or a cold surface on the surface of the water tank (10) by heating or cooling the water in the water tank (10). By heating or cooling the water in the water tank (10), a hot surface or a cold surface is formed on the surface of the water tank (10). The humid air is quickly dehumidified by hitting the cold surface and the hot surface successively.

In an embodiment of the present invention, the dishwasher (1) comprises a first water tank (10a) where a cold surface is formed and that the extension (9) extending from the first heat exchanger (5) reaches and a second water tank (10b) where a hot surface is formed and that the extension (9) extending from the second heat exchanger (6) reaches. The extension (9) of the first heat exchanger (5) reaches the first water tank (10a). The extension (9) of the second heat exchanger (6) reaches the second water tank (10b). Thus, cold water is collected in the first water tank (10a) and hot water is collected in the second water tank (10b). By transferring the collected water, the cold surface is formed on the first water tank (10a) and the hot surface is formed on the second water tank (10b).

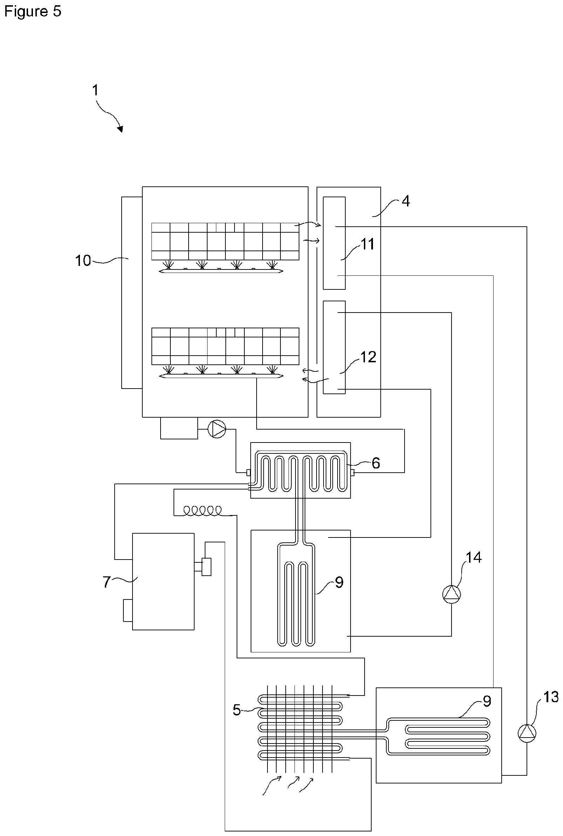

In an embodiment of the present invention, the dishwasher (1) comprises the drying duct (4) comprising a hot water tank (11) and a cold water tank (12) that are arranged between the washing tub (3) and the body (2), a first pump (13) that enables the water cooled in the first water tank (10a) to be transferred to the cold water tank (12), and a second pump (14) that enables the water heated in the second water tank (10b) to be transferred to the hot water tank (11). The drying duct (4) comprises the hot water tank (11) and the cold water tank (12) so as to provide a quicker drying. The water collected in the first water tank (10a) and the second water tank (10b) can be sent to the water tanks (11, 12) in the drying duct (4) by means of the pumps (13, 14) (Figure 5).

By means of the present invention, a dishwasher (1) with improved drying performance is realized. The heat pump (8) comprises a first heat exchanger (5) and a second heat exchanger (6). At least one extension (9) extends from the first heat exchanger (5) and/or second heat exchanger (6) into the space between the washing tub (3) and the body (2). By means of the extensions (9), heat on the heat exchangers (5, 6) is stored. By transferring the heat to the water, the drying process is expedited by forming cold and/or hot surfaces on the water tanks (10a, 10b) and the water that collected in the water tanks (10a, 10b) can be used in various processes.

## Claims

1. A dishwasher (1) **comprising** a body (2); a washing tub (3) that is disposed in the body (2) and wherein the washing process is performed; a drying duct (4) that is arranged between the washing tub (3) and the body (2) and that enables the dry air to be sent into the washing tub (3); and a heat pump (8) that is disposed under the washing tub (3) and that has a first heat exchanger (5) enabling the water to be used in the washing step to be heated by drawing heat from the environment, a second heat exchanger (6) transferring the heat received from the first heat exchanger (5) to the washing water and a compressor (7) fluidly connected to the first heat exchanger (5) and the second heat exchanger (6) so as to realize the refrigerant cycle, **characterized by** at least one water tank (10) that is disposed between the washing tub (3) and the body (2), and at least one extension (9) that extends from the first heat exchanger (5) and/or the second heat exchanger (6) towards the water tank (10) so as to enable the water in the water tank (10) to be heated or cooled.

2. A dishwasher (1) as in claim 1, **characterized by** the extension (9) that enables the formation of a hot surface or a cold surface on the surface of the water tank (10) by heating or cooling the water in the water tank (10).

3. A dishwasher (1) as in any one of the above claims, **characterized by** a first water tank (10a) where a cold surface is formed and that the extension (9) extending from the first heat exchanger (5) reaches and a second water tank (10b) where a hot surface is formed and where the extension (9) extending from the second heat exchanger (6) reaches.

4. A dishwasher (1) as in any one of the above claims, **characterized by** the drying duct (4) comprising a hot water tank (11) and a cold water tank (12) that are arranged between the washing tub (3) and the body (2), a first pump (13) that enables the water cooled in the first water tank (10a) to be transferred to the cold water tank (12), and a second pump (14) that enables the water heated in the second water tank (10b) to be transferred to the hot water tank (11).

## Patentansprüche

1. Eine Geschirrspülmaschine (1) umfasst einen Körper (2); eine Waschwanne (3), die in dem Körper (2) angeordnet ist und in der der Waschvorgang durchgeführt wird; eine Trocknungsleitung (4), die zwischen der Waschwanne (3) und dem Körper (2) angeordnet ist und die es ermöglicht, dass die trockene Luft in die Waschwanne (3) geleitet wird; und eine Wärmepumpe (8), die unter der Waschwanne (3) angeordnet ist und die einen ersten Wärmetauscher (5), der es ermöglicht, das in dem Waschschritt zu verwendende Wasser durch Entzug von Wärme aus der Umgebung zu erwärmen, einen zweiten Wärmetauscher (6), der die von dem ersten Wärmetauscher (5) erhaltene Wärme auf das Waschwasser überträgt, und einen Kompressor (7) aufweist, der mit dem ersten Wärmetauscher (5) und dem zweiten Wärmetauscher (6) in Fluidverbindung steht, um den Kühlkreislauf zu bewirken, **gekennzeichnet ist sie dadurch,** dass mindestens ein Wassertank (10), der zwischen der Waschwanne (3) und dem Körper (2) angeordnet ist, und mindestens eine Verlängerung (9), die sich von dem ersten Wärmetauscher (5) und/oder dem zweiten Wärmetauscher (6) zu dem Wassertank (10) hin erstreckt, so dass das Wasser in dem Wassertank (10) erwärmt oder gekühlt werden kann.

2. Eine Geschirrspülmaschine (1) wie in Anspruch 1 aufgeführt, **ist dadurch gekennzeichnet, dass** die Verlängerung (9), der die Bildung einer heißen oder kalten Oberfläche auf der Oberfläche des Wassertanks (10) durch Erwärmen oder Kühlen des Wassers im Wassertank (10) ermöglicht.

3. Eine Geschirrspülmaschine (1) wie in einem de vorherigen Ansprüchen aufgeführt, **ist dadurch gekennzeichnet, dass** ein erster Wassertank (10a), in dem eine kalte Oberfläche gebildet wird und in den die vom ersten Wärmetauscher (5) ausgehende Verlängerung (9) hineinreicht, und ein zweiter Wassertank (10b), in dem eine heiße Oberfläche gebildet wird und in den die vom zweiten Wärmetauscher (6) ausgehende Verlängerung (9) hineinreicht.

4. Eine Geschirrspülmaschine (1) wie in einem de vorherigen Ansprüchen aufgeführt, **ist dadurch gekennzeichnet, dass** die Trocknungsleitung (4) einen Warmwassertank (11) und einen Kaltwassertank (12), die zwischen der Waschwanne (3) und dem Körper (2) angeordnet sind, eine erste Pumpe (13), die es ermöglicht, das im ersten Wassertank (10a) abgekühlte Wasser in den Kaltwassertank (12) zu leiten, und eine zweite Pumpe (14), die es ermöglicht, das im zweiten Wassertank (10b) erwärmte Wasser in den Warmwassertank (11) zu leiten, umfasst.

## Revendications

1. Un lave-vaisselle (1) **comprenant** un corps (2) ; une cuve de lavage (3) disposée dans le corps (2) et dans laquelle le processus de lavage est effectué ; un conduit de séchage (4) qui est disposé entre la cuve de lavage (3) et le corps (2) et qui permet d'envoyer de l'air sec dans la cuve de lavage (3) ; et une pompe à chaleur (8) qui est disposée sous la cuve de lavage (3) et qui comporte un premier échangeur de chaleur (5) permettant de chauffer l'eau à utiliser lors de l'étape de lavage en puisant la chaleur de l'environnement, un second échangeur de chaleur (6) transférant la chaleur reçue du premier échangeur de chaleur (5) à l'eau de lavage, et un compresseur (7) qui est raccordé fluidiquement au premier échangeur de chaleur (5) et au second échangeur de chaleur (6) de manière à réaliser le cycle frigorifique, **caractérisé par** au moins un réservoir d'eau (10) qui est disposé entre la cuve de lavage (3) et le corps (2), et au moins une extension (9) qui s'étend du premier échangeur de chaleur (5) et/ou du second échangeur de chaleur (6) vers le réservoir d'eau (10) afin de permettre le chauffage ou le refroidissement de l'eau contenue dans le réservoir d'eau (10).

2. Un lave-vaisselle (1) selon la revendication 1, **caractérisé par** l'extension (9) qui permet la formation d'une surface chaude ou d'une surface froide sur la surface du réservoir d'eau (10) en chauffant ou refroidissant l'eau contenue dans le réservoir d'eau (10).

3. Un lave-vaisselle (1) selon l'une quelconque des revendications précédentes, **caractérisé par** un premier réservoir d'eau (10a) où une surface froide est formée et qu'atteint l'extension (9) s'étendant à partir du premier échangeur de chaleur (5), et un second réservoir d'eau (10b) où une surface chaude est formée et qu'atteint l'extension (9) s'étendant à partir du second échangeur de chaleur (6).

4. Un lave-vaisselle (1) selon l'une quelconque des revendications précédentes, **caractérisé par** le conduit de séchage (4) comprenant un réservoir d'eau chaude (11) et un réservoir d'eau froide (12) qui sont disposés entre la cuve de lavage (3) et le corps (2), une première pompe (13) qui permet de transférer l'eau refroidie dans le premier réservoir d'eau (10a) vers le réservoir d'eau froide (12), et une seconde pompe (14) qui permet de transférer l'eau chauffée dans le second réservoir d'eau (10b) vers le réservoir d'eau chaude (11).
